# FASCICULE DE BREVET EUROPEEN

(11) **EP 3 465 861 B1**
(45) Date de publication et mention de la délivrance du brevet: **13.05.2020**
(21) Numéro de dépôt: 17732511.5
(22) Date de dépôt: 30.05.2017
(51) Int. Cl.: H02J 3/32, H02J 3/28, H02J 3/38, H02J 1/00, H02J 1/10, H01M 16/00, H01M 8/04537, H02J 15/00

(54) **PROCEDE D'ALIMENTATION ELECTRIQUE D'UN EQUIPEMENT PAR UNE STATION AUTONOME HYBRIDE**
VERFAHREN ZUR STROMVERSORGUNG EINER VORRICHTUNG DURCH EINE AUTONOME HYBRIDE STATION
METHOD FOR ELECTRICAL SUPPLY OF AN APPARATUS BY AN AUTONOMOUS HYBRID STATION

(30) Priorité: 30.05.2016 FR 1654835
(43) Date de publication de la demande: 10.04.2019
(73) Titulaire: Centre National de la Recherche Scientifique (CNRS), 75016 Paris (FR); Universite d'Orleans, 45000 Orléans (FR); Cresitt Industrie, 45166 Olivet Cedex (FR)
(72) Inventeur: BRAULT, Pascal, 45560 SAINT DENIS EN VAL (FR); GROLLEAU, Cédric, 41100 SAINT ANNE (FR); ROUXEL, Samuel, 45130 LE BARDON (FR); GASNIER, Serge, 45000 ORLEANS (FR); CAILLARD, Amael, 45370 Cléry Saint André (FR); LECAS, Thomas, 45550 SAINT DENIS DE L'HOTEL (FR)
(74) Mandataire: LLR
(86) Numéro de dépôt international: PCT/FR2017/051338
(87) Numéro de publication internationale: WO 2017/207910

(56) Documents cités:
- EP-A1- 2 048 759
- EP-A1- 2 686 934
- EP-A1- 2 953 198
- EP-A2- 0 136 187

## Description

### DOMAINE TECHNIQUE GENERAL

La présente invention concerne le domaine des stations autonomes dites hybrides combinant au moins une source électrique intermittente, au moins une unité électrochimique de génération de combustible chimique, au moins une pile à combustible et des moyens de stockage électrique.

Plus précisément, l'invention concerne un procédé de contrôle d'une telle station autonome.

### ETAT DE L'ART

Dans un contexte de fort développement des Energies Renouvelables, le besoin en flexibilité des installations électriques est accru.

Ces énergies renouvelables, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme augmentent fortement.

De ce fait, il est connu de coupler une source d'énergie renouvelable avec des moyens de stockage électriques tels que des batteries, et le cas échéant une source auxiliaire telle qu'un groupe électrogène pour pallier les moments où ni la batterie ni la source renouvelables ne sont capables de fournir assez de courant pour l'usage qui leur est destiné.

Ces systèmes forment des stations autonomes, quelques fois adaptées pour être transportables facilement (par exemple montées sur roues), qui peuvent être déployées, par exemple, de sorte à alimenter de façon fiable des zones reculées.

En particulier, il a été proposé d'utiliser comme source électrogène une pile à combustible, et d'adjoindre à la station une unité électrochimique générant le combustible pour ladite pile. On appelle de telles stations des stations autonomes hybrides.

Une pile à combustible est une génératrice électrique dans laquelle est mise en oeuvre l'oxydation sur une électrode d'un combustible réducteur (par exemple le dihydrogène) couplée à la réduction sur l'autre électrode d'un oxydant (tel que le dioxygène de l'air).

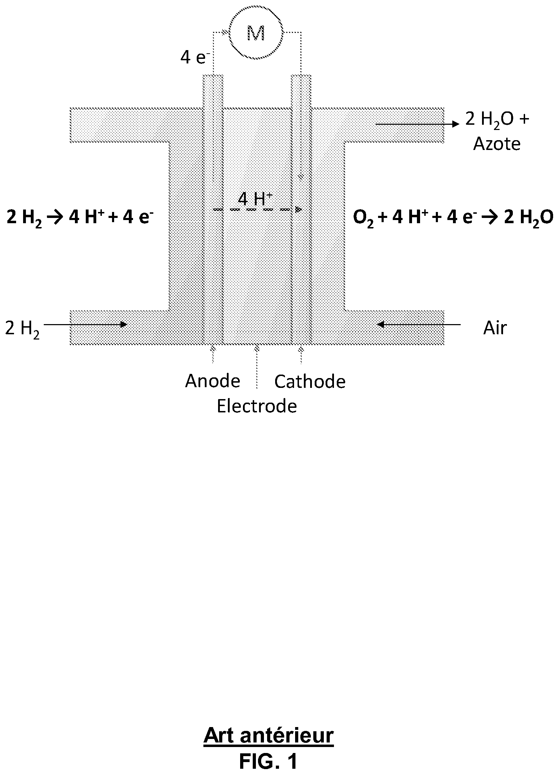

Ainsi, le fonctionnement d'une pile à combustible (dont un exemple est représenté par la **figure 1**) est régi dans le cas du dihydrogène par les réactions d'oxydoréduction suivantes :
- A l'anode : 2 H₂ → 4 H⁺ + 4 e⁻
- A la cathode : O₂ + 4 H⁺ + 4 e⁻ → 2 H₂O

Le flux d'électrons produits à l'anode peut ainsi alimenter une charge électrique avant d'être réacheminé jusqu'à la cathode.

L'unité chimique associée générant le combustible est typiquement un électrolyseur qui « force » les réactions d'oxydo-réduction inverses sous l'effet d'un courant. Le principe de l'électrolyse peut être résumé par l'équation suivante : 2 H2O + électricité → 2 H2 + O2. On note qu'il existe d'ailleurs des piles à combustible « réversibles » qui sont capables de consommer ou produire du courant (et donc respectivement produire ou consommer du dihydrogène) au choix.

Ainsi, le dihydrogène (ou un autre combustible chimique) peut être utilisé comme moyen de stockage chimique de l'énergie électrique. Il est produit ou consommé pour adapter la production électrique de la station aux besoins et aux niveaux de puissance de la source intermittente et de la batterie.

La demande FR2972867 propose à ce titre un procédé de gestion de l'énergie dans une telle station autonome où on génère de l'hydrogène uniquement si la batterie est chargée, avec priorité donnée à l'utilisation de la batterie en cas de demande, la pile à combustible n'étant utilisée que si la batterie atteint son seuil de profondeur de décharge. En d'autres termes, la batterie est utilisée dès lors que sa puissance disponible est entre un seuil haut et un seuil bas, l'électrolyseur ou la pile à combustible étant utilisés seulement si la batterie est respectivement au-dessus du seuil haut, ou en dessous du seuil bas.

Cette solution apporte satisfaction et permet d'optimiser le rendement global du système.

Toutefois, on constate qu'elle est susceptible de provoquer un vieillissement prématuré de la pile à combustible ou de l'électrolyseur. En effet, ces équipements (et les éléments électrochimiques en général) sont adaptés à des cycles de fonctionnement lents et subissent des « à-coups » les endommageant s'il y a trop peu de temps entre un allumage et une extinction, et inversement.

Il serait par conséquent souhaitable de disposer d'un procédé de gestion tout aussi optimisé mais qui en plus prenne soin des équipements électrochimiques et allonge leur durée de vie.

### PRESENTATION DE L'INVENTION

Selon un premier aspect, l'invention propose de pallier ces inconvénients via un procédé d'alimentation électrique d'un équipement par un système comprenant une source électrique intermittente, des moyens de stockage électrique, une pile à combustible, une unité électrochimique de génération dudit combustible, caractérisé en ce qu'il comprend la mise en oeuvre d'étapes par un module de contrôle d'étapes de :
(a) détermination d'un solde de puissance du système en fonction de la puissance consommée par l'équipement et de la puissance fournie par la source électrique intermittente.
(b) réception de données représentatives de la stabilité dudit solde de puissance pendant une période de sécurité ;
(c) contrôle de la pile à combustible et de l'unité électrochimique de sorte à :
   o activer l'unité électrochimique si ledit solde de puissance est supérieur à un premier seuil et lesdites données ne sont pas caractéristiques d'une baisse prochaine dudit solde de puissance ;
   o activer la pile à combustible si ledit solde de puissance est inférieur à un deuxième seuil inférieur au premier seuil et lesdites données ne sont pas caractéristiques d'une hausse prochaine dudit solde de puissance.

Le dispositif selon l'invention est avantageusement complété par les caractéristiques suivantes, prises seules ou en une quelconque de leur combinaison techniquement possible :
- l'étape (c) comprend le contrôle de la pile à combustible de sorte à activer la pile à combustible même si ledit solde de puissance est inférieur à un deuxième seuil inférieur au premier seuil et lesdites données sont caractéristiques d'une hausse prochaine dudit solde de puissance ; si une quantité d'énergie stockée par les moyens de stockage électrique est insuffisante pour alimenter l'équipement pendant ladite période de sécurité ;
- l'étape (c) comprend le contrôle de la pile à combustible de sorte à désactiver la pile à combustible si ledit solde de puissance est supérieur au deuxième seuil et lesdites données ne sont pas caractéristiques d'une baisse prochaine dudit solde de puissance ;
- l'étape (c) comprend le contrôle de l'unité électrochimique de sorte à désactiver l'unité électrochimique si ledit solde de puissance est inférieur au premier seuil et lesdites données ne sont pas caractéristiques d'une hausse prochaine dudit solde de puissance ;
- l'étape (c) comprend le contrôle de l'unité électrochimique de sorte à désactiver l'unité électrochimique si ledit solde de puissance est inférieur au premier seuil et lesdites données ne sont pas caractéristiques d'une hausse prochaine dudit solde de puissance ; si une quantité d'énergie stockée par les moyens de stockage électrique est insuffisante pour alimenter l'équipement et l'unité électrochimique pendant ladite période de sécurité ;
- ladite période de sécurité est une durée minimale recommandée de fonctionnement continu de la pile à combustible ou de l'unité électrochimique pour éviter leur endommagement;
- ladite période de sécurité est comprise entre une et dix minutes ;
- l'unité électrochimique est constituée d'au moins un électrolyseur ;
- l'unité électrochimique et la pile à combustible sont un unique équipement réversible ;
- ledit combustible est du dihydrogène ;
- les moyens de stockage électrique, sont constitués d'au moins une batterie et/ou au moins un supercondensateur et/ou au moins un volant d'inertie ;
- le premier seuil de solde de puissance correspond sensiblement à la puissance nécessaire pour le fonctionnement de l'unité électrochimique, et le deuxième seuil de solde de puissance est sensiblement nul.

Selon un deuxième aspect, l'invention concerne un système comprenant une source électrique intermittente, des moyens de stockage électrique, une pile à combustible, une unité électrochimique de génération dudit combustible et un module de contrôle, configuré pour mettre en oeuvre :
- un module de détermination d'un solde de puissance du système en fonction de la puissance consommée par un équipement alimenté par le système et de la puissance fournie par la source électrique intermittente ;
- un module de réception de données représentatives de la stabilité dudit solde de puissance pendant une période de sécurité ;
- un module d'activation de l'unité électrochimique si ledit solde de puissance est supérieur à un premier seuil et lesdites données ne sont pas caractéristiques d'une baisse prochaine dudit solde de puissance ;
- un module d'activation de la pile à combustible si ledit solde de puissance est inférieur à un deuxième seuil inférieur au premier seuil et lesdites données ne sont pas caractéristiques d'une hausse prochaine dudit solde de puissance.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 précédemment décrite est un schéma d'une pile à hydrogène connue ;
- la figure 2 représente un système pour la mise en oeuvre du procédé d'alimentation d'un équipement selon l'invention.

### DESCRIPTION DETAILLEE

### Architecture générale

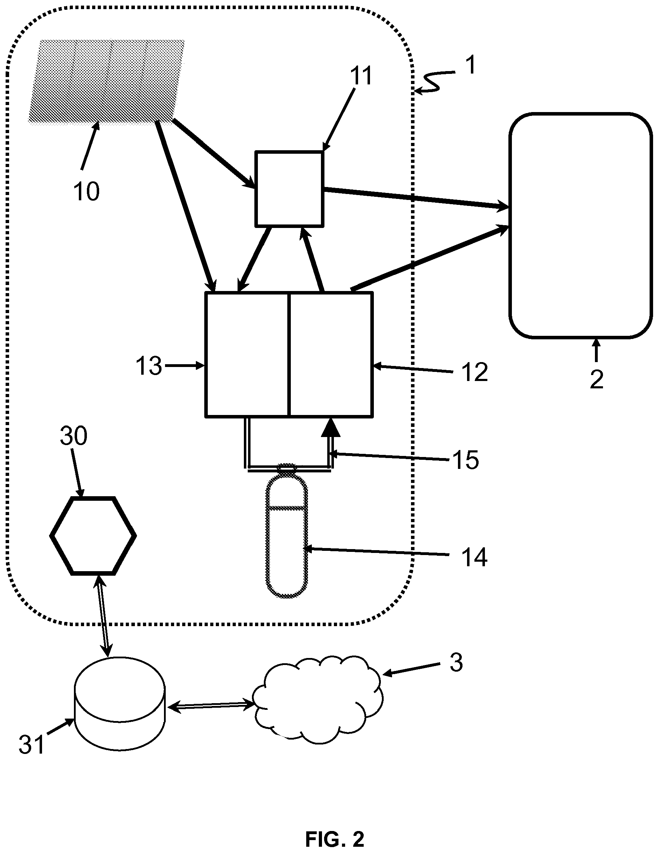

La **figure 2** représente un mode de réalisation préféré d'un système 1 pour la mise en oeuvre du présent procédé d'alimentation d'un équipement 2.

L'équipement 2 peut être n'importe quel dispositif ou ensemble de dispositif consommateur d'électricité. A tout instant, l'équipement 2 consomme une puissance consommée *P_{c}(t)* qui peut être variable, nulle à certains moments.

Le système 1 est une station autonome telle qu'évoquée précédemment, constitué de deux ensembles principaux : un ensemble « électrique » et un ensemble « chimique ».

L'ensemble électrique comprend une source électrique intermittente 10, des moyens de stockage électrique 11, ainsi que d'éventuels composants électriques additionnels (transformateurs, systèmes de protection électrique, etc.).

La source électrique intermittente 10 est avantageusement alimentée par une ou plusieurs sources d'énergie d'origine renouvelable, i.e. la source électrique est avantageusement constituée d'une ou plusieurs génératrices électriques alimentées par des énergies renouvelables. De façon préférée, la source électrique intermittente 10 comprend ainsi un ou plusieurs panneaux photovoltaïques et/ou une ou plusieurs éoliennes.

Par « intermittence », on comprendra que la source 10 fournit une puissance *P_{F}(t)* variable, dépendant de phénomènes physiques extérieurs (soleil, vent, température, etc.) et ainsi non contrôlables. En d'autres termes, la source 10 ne consomme aucun combustible, et on comprendra bien qu'un équipement du type de la pile à combustible 12 qui sera décrite plus loin (qui consomme un combustible chimique) n'est pas une source électrique intermittente 10 au sens de la présente invention.

Les moyens de stockage électrique 11 servent de façon générale de « tampon » entre le système 1 et l'équipement 2. Plus précisément, ils stockent et déstockent de l'électricité de sorte à lisser les variations de puissance de la source intermittente 10. Ils sont connectés électriquement à chacun des autres composants 10, 12, 13 du système 1. Les moyens de stockage électrique 11 sont avantageusement constitués d'au moins une batterie et/ou au moins un supercondensateur et/ou au moins un volant d'inertie.

De l'autre côté, l'ensemble chimique comprend au moins une pile à combustible 12 et au moins une unité électrochimique de génération dudit combustible 13. Ces deux éléments sont respectivement capables de produire de l'électricité en consommant un combustible chimique, et de produire ledit combustible chimique en consommant de l'électricité. Chaque pile à combustible 12 et chaque unité électrochimique 13 peut comprendre plusieurs cellules mettant en oeuvre la réaction chimique.

De façon préférée (et cet exemple sera utilisé dans la suite de la présente description), ledit combustible chimique est le dihydrogène gazeux, mais l'homme du métier saura utiliser d'autres combustibles pour lesquels des piles à combustible compatibles existent, tel que le méthanol, l'acide formique ou l'hydrure de bore, etc.

Comme expliqué, la pile à combustible 12 est une génératrice électrique dans laquelle ledit combustible chimique est oxydé sur une électrode alors qu'est réduit sur l'autre électrode un comburant, oxydant, en particulier du dioxygène atmosphérique. Dans le cas du dihydrogène, comme expliqué le produit de la réaction est de l'eau.

Une pile à combustible ne met pas en oeuvre de combustion, ce qui lui permet d'obtenir des rendements très élevés. De nombreuses technologies de pile à combustible existent, en particulier de pile à hydrogène, et l'homme du métier pourra par exemple utiliser une pile à combustible à membrane d'échange de protons (PEM), ou pile à oxyde solide.

L'unité électrochimique de génération dudit combustible 13 est le composant ayant le rôle inverse de la pile à combustible 12 : elle consomme de l'électricité pour générer ledit carburant chimique. Lorsque celui-ci est le dihydrogène, l'unité 13 le produit à partir d'eau, qui se trouve naturellement en grande quantité, typiquement par électrolyse, c'est-à-dire la mise en oeuvre de réactions chimiques grâce à une différence de potentiel électrique.

Dans la suite de la présente description, on prendra l'exemple d'une unité 13 de type électrolyseur, mais l'homme du métier saura produire le combustible chimique d'autres façons, par exemple par thermolyse.

Dans le cas d'au moins un électrolyseur, il peut être de différentes technologies, en particulier à membrane d'échange de protons. Une telle technologie permet avantageusement que l'unité électrochimique 13 et la pile à combustible 12 soient un unique équipement réversible. En d'autres termes, cet équipement réversible produit du dihydrogène s'il est alimenté en courant, et produit du courant s'il est approvisionné en dihydrogène. Cela simplifie grandement la structure du système 1, et limite grandement son encombrement.

Alternativement, on pourra par exemple utiliser un électrolyseur haute température (adapté pour mettre en oeuvre une électrolyse de vapeur d'eau à une température d'environ 800°C), lequel présente un rendement encore meilleur.

De façon préférée, l'ensemble « chimique » comprend également des « auxiliaires », c'est-à-dire des moyens de stockage du dihydrogène 14 (des bouteilles haute pression), le cas échéant un compresseur, et un circuit de dihydrogène 15 (pour transférer ce dernier de l'unité 13 à la pile 12 et/ou aux moyens de stockage 14). Dans le cas d'un équipement unique de production et consommation, le circuit 15 relie cet équipement 12, 13, et les bouteilles 15, le dihydrogène faisant des allers-retours).

On comprendra qu'il peut y avoir plusieurs unités 13 et/ou plusieurs piles 12, chacune avec le cas échéant plusieurs cellules, selon le dimensionnement du système 1. La présente description prendra l'exemple d'une unique unité 13 et d'une unique pile 12, mais l'homme du métier saura appliquer le procédé à plusieurs de ces éléments.

Le système 1 comprend également un module de contrôle 30 qui commande chacun des éléments du système 1. Plus précisément, le module 30 gère l'alimentation électrique de l'équipement 2 en commandant l'activation/désactivation de chaque élément et le routage de l'électricité. Par exemple, le module 30 contrôle si les moyens de stockage 11 sont en charge ou en décharge.

A ce titre, le module 30 est capable de connaître à tout instant les paramètres de ces éléments (puissance fournie par la source 10, puissance consommée par l'équipement 2, niveau de charge des moyens de stockage 11, quantité de dihydrogène gazeux disponible, etc.), de sorte à mettre en oeuvre le présent procédé de la façon qui va être à présent décrite.

Le module de contrôle 30 est typiquement une carte électronique ou un processeur, avantageusement connecté à un réseau de communication 3 comme on va le voir.

### Procédé

Le présent procédé commence par une étape (a) de détermination d'un solde de puissance du système 1, noté Δ*P(t)* en fonction de la puissance consommée par l'équipement 2, notée *P_{C}(t),* et de la puissance fournie par la source électrique intermittente 10, notée *P_{F}(t).*

Ces grandeurs sont typiquement liées par la relation Δ*P(t)*= *P_{F}(t)- P_{C}(t).* On note que le solde de puissance Δ*P(t)* peut tout à fait être négatif, notamment si la puissance fournie est faible (par exemple en cas de passage d'un nuage, si la source intermittente 10 est un panneau photovoltaïque). Dans ce cas cela signifie que le système 1 apporte la puissance manquante au fonctionnement de l'équipement 2 en déchargeant les moyens de stockage 11 et/ou en faisant fonctionner la pile à combustible 12.

Dans une étape (b), le procédé voit la réception par le module de contrôle 30 de données représentatives de la stabilité dudit solde de puissance Δ*P(t)* pendant une période de sécurité *t_{SEC}.* En fonction de ces données, le module 30 va comme l'on va voir gérer les composants du système 1 de façon optimisée et respectueuse de leur intégrité.

En d'autres termes, le module de contrôle 30 agit comme un module de pré-traitement des données représentatives de la stabilité dudit solde de puissance.

En effet, là où l'art antérieur se focalisait sur le niveau de charge de la batterie pour contrôler le système 1, et négligeait par conséquent les éléments électrochimiques que sont la pile à combustible 12 et l'unité 13, le présent procédé utilise principalement les variations du solde de puissance comme grandeur de référence. Comme l'on va voir, cela permet une gestion de l'énergie toute aussi optimale tout en améliorant la durée de vie ces éléments électrochimiques.

Par données représentatives de la stabilité dudit solde de puissance Δ*P(t)*, on entend données prévisionnelles relatives à la puissance *P_{C}(t)* consommée par l'équipement 2, et/ou à la puissance *P_{F}(t)* fournie par la source électrique intermittente 10.

Par exemple, si lesdites données sont représentatives d'une baisse prochaine de la puissance fournie *P_{F}(t),* alors le module de contrôle 30 peut déterminer que le solde de puissance Δ*P(t)* n'est pas stable et va baisser.

Ainsi, ledit solde de puissance pendant la période de sécurité *t_{SEC}* est avantageusement déterminé comme étant :
- Stable (i.e. sensiblement constant, c'est-à-dire que Δ*P(t₀)* ≈ Δ*P(t₀*+ *t_{SEC})*),
- Instable à la baisse (i.e. Δ*P(t₀)* > Δ*P(t₀*+ *t_{SEC}))*, ou
- Instable à la hausse (i.e. Δ*P(t₀)* < Δ*P(t₀*+ *t_{SEC})).*

La valeur « future » (i.e. à l'issue de la période de sécurité) du solde de puissance peut éventuellement être estimée, mais ce n'est pas impératif, seul l'évaluation de la stabilité est requise.

Ladite période de sécurité *t_{SEC}* correspond avantageusement à une durée minimale recommandée de fonctionnement continu de la pile à combustible 12 ou de l'unité électrochimique 13 pour éviter son endommagement, d'où son appellation « de sécurité ». Plus précisément, il s'agit d'une durée avant l'expiration de laquelle il n'est pas souhaitable de changer à nouveau d'état (activer/désactiver) la pile à combustible 12 ou l'unité électrochimique 13 sous peine de provoquer un vieillissement prématuré.

Au vu des technologies actuelles de ces éléments électrochimiques, ladite période de sécurité est typiquement comprise entre une et dix minutes.

Ces données représentatives de la stabilité dudit solde de puissance désignent, comme expliqué de façon générale, toutes les informations pouvant avoir un impact sur la production de la source 10 et/ou la consommation de l'équipement 2.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) notamment via un boitier 31, en particulier en temps réel.

En ce qui concerne la consommation, les données de prévision peuvent être des données estimées par des modèles, ou tout simplement les données de la veille, voire un planning de fonctionnement de l'équipement 2 s'il est disponible.

Dans un mode de réalisation, le boitier 31 est un équipement d'accès à internet de type « box » d'un fournisseur d'accès à Internet (par exemple un modem 4G pour un fonctionnement autonome), connecté au module de contrôle 30 par des moyens de connexion réseau tels que le Wi-Fi, une liaison Ethernet ou USB, etc. Les données peuvent éventuellement être tout simplement des données pré-traitées sur des serveurs d'un fournisseur d'électricité opérant le système 1.

La présente invention n'est ni limitée à un type particulier de données représentatives de la stabilité dudit solde de puissance, ni à une manière de fournir ces données.

### Contrôle

Dans une étape (c), le module 30 contrôle la pile à combustible 12 et de l'unité électrochimique 13 (et les autres éléments du système 1) en fonction du solde de puissance et de sa stabilité estimée, de sorte à alimenter l'équipement 2 de façon optimale.

En particulier, l'unité électrochimique 13 est activée si (et avantageusement seulement si) ledit solde de puissance est supérieur à un premier seuil et lesdites données ne sont pas caractéristiques d'une baisse prochaine dudit solde de puissance.

Le premier seuil correspond avantageusement sensiblement à la puissance nécessaire pour le fonctionnement de l'unité électrochimique 13 (i.e. la puissance de l'unité électrochimique 13 ainsi que celle de ses auxiliaires), noté *P_{H2}*.

En d'autres termes la génération d'hydrogène n'est ordonnée que si Δ*P* > *P_{H2}*, i.e. *P_{F} > P_{C}* + *P_{H2}*, c'est-à-dire si la source 10 fournit une puissance suffisante pour alimenter à la fois l'équipement 2 et l'unité électrochimique 13, mais de façon durable.

Plus précisément, même si la puissance est suffisante, si les données prévisionnelles montrent que cela ne va pas durer plus longtemps que la période de sécurité alors l'unité électrochimique 13 n'est pas activée. Cela évite sa désactivation quelques minutes plus tard et les dégâts associée à cette coupure trop peu de temps après son activation (avant la fin de la période de sécurité).

Dans ce cas de non-activation pour instabilité, le surplus de puissance (non utilisé par l'équipement 2) est utilisé si possible pour charger les moyens de stockage 11 (et dans le pire des cas perdu, mais dans la mesure où cela ne peut pas durer plus de quelques minutes, c'est négligeable).

En ce qui concerne la pile à combustible 12, elle est activée si (et avantageusement seulement si, à une éventuelle unique exception près qui sera décrite plus loin) ledit solde de puissance est inférieur à un deuxième seuil inférieur au premier seuil et lesdites données ne sont pas caractéristiques d'une hausse prochaine dudit solde de puissance.

Le deuxième seuil est avantageusement sensiblement nul. En d'autres termes la consommation d'hydrogène n'est ordonnée que si *0* ≥ Δ*P* i.e. *P_{F}* ≤ *P_{C}*, c'est-à-dire si la source 10 ne fournit pas une puissance suffisante pour alimenter au moins l'équipement 2, mais de façon durable.

Plus précisément, même si la puissance est insuffisante, si les données prévisionnelles montrent que cela ne va pas durer plus longtemps que la période de sécurité (cela signifie que la source 10 va fournir une puissance suffisante pour alimenter au moins l'équipement 2 d'ici quelques minutes, et donc que la consommation d'hydrogène ne sera plus nécessaire) alors la pile à combustible 12 n'est pas activée. Cela évite sa désactivation quelques minutes plus tard et les dégâts associée à cette coupure trop peu de temps après son activation (avant la fin de la période de sécurité).

Pendant ce laps de temps, l'équipement 2 décharge les moyens de stockage 11 pour récupérer le reliquat de puissance *P_{C}* - *P_{F}.* Dans la mesure où cette situation ne doit pas durer plus de quelques minutes, la charge de la batterie est normalement largement suffisante.

A noter qu'il peut être tout de même prévu une activation d'urgence de la pile à combustible 12 même si ledit solde de puissance est inférieur à un deuxième seuil inférieur au premier seuil et lesdites données sont caractéristiques d'une hausse prochaine dudit solde de puissance ; si une quantité d'énergie stockée par les moyens de stockage électrique 11 est insuffisante pour alimenter l'équipement 2 pendant ladite période de sécurité.

Cela évite une situation problématique dans laquelle l'alimentation de l'équipement 2 serait interrompue de façon brutale, causant un problème de qualité de service et des conséquences potentiellement grave si l'équipement 2 est critique (équipement de télécommunication, équipement militaire, etc.)

Plus précisément, si Q est la charge de la batterie et que le système 1 (et le cas échéant l'équipement 2) fonctionne sous une tension U, l'activation d'urgence est mise en œuvre si Q * *U < (P_{C}* - *P_{F})* * *t_{SEC}.*

Si le solde de puissance est dans la zone intermédiaire entre les deux seuils, (c'est-à-dire si la source 10 fournit une puissance suffisante pour alimenter l'équipement 2, mais pas à la fois l'équipement 2 et l'unité électrochimique 13), i.e. *P_{H2}* > Δ*P > 0* i.e. *P_{C} + P_{H2}* > *P_{F}* > *P_{C}*, certaines décisions sont avantageusement prises par le module de contrôle 30 de sorte à optimiser encore les performances du système 1 tout en protégeant encore les éléments électrochimiques 12 et 13.

En d'autres termes, eu égard le deuxième seuil, la pile à combustible 12 est préférentiellement désactivée (dans le cas d'un état préalablement actif) si (et avantageusement seulement si) ledit solde de puissance est supérieur au deuxième seuil et lesdites données ne sont pas caractéristiques d'une baisse prochaine dudit solde de puissance, c'est-à-dire si la source 10 fournit une puissance suffisante pour alimenter au moins l'équipement 2, mais de façon durable.

Plus précisément, même si la puissance fournie est à présent suffisante pour ne plus avoir besoin en théorie de consommer du dihydrogène, si les données prévisionnelles montrent que cela ne va pas durer plus longtemps que la période de sécurité (cela signifie que la puissance fournie pas la source 10 va à nouveau être insuffisante pour alimenter au moins l'équipement 2 d'ici quelques minutes, et donc que la consommation d'hydrogène sera à nouveau nécessaire) alors la pile à combustible 12 n'est pas désactivée, i.e. reste activée. Cela évite sa réactivation quelques minutes plus tard et les dégâts associée à cet allumage trop peu de temps après sa désactivation (avant la fin de la période de sécurité).

Similairement, eu égard le premier seuil, l'unité électrochimique 13 est préférentiellement désactivée (dans le cas d'un état préalablement actif) si (et avantageusement seulement si, à une éventuelle unique exception près qui sera décrite plus loin) ledit solde de puissance est inférieur au premier seuil et lesdites données ne sont pas caractéristiques d'une hausse prochaine dudit solde de puissance, c'est-à-dire si la source 10 ne fournit pas une puissance suffisante pour alimenter à la fois l'équipement 2 et l'unité électrochimique 13, mais de façon durable.

Plus précisément, même si la puissance totale est insuffisante pour continuer à générer du dihydrogène, si les données prévisionnelles montrent que cela ne va pas durer plus longtemps que la période de sécurité (cela signifie que la source 10 va fournir une puissance suffisante pour alimenter à la fois l'équipement 2 et l'unité électrochimique 13 d'ici quelques minutes, et donc que la production d'hydrogène sera à, nouveau possible) alors l'unité électrochimique 13 n'est pas désactivée, i.e. reste activée. Cela évite sa réactivation quelques minutes plus tard et les dégâts associée à cet allumage trop peu de temps après sa désactivation (avant la fin de la période de sécurité)

Pendant ce laps de temps, l'équipement 2 utilise l'énergie de la source intermittente 10 alors que l'unité électrochimique 13 décharge les moyens de stockage 11 pour récupérer le reliquat de puissance *P_{C}* + *P_{H2} -P_{F}.* Dans la mesure où cette situation ne doit pas durer plus de quelques minutes, la charge de la batterie est normalement largement suffisante.

A noter qu'il peut être tout de même prévu une désactivation d'urgence de l'unité électrochimique 13 même si ledit solde de puissance est inférieur au premier seuil et lesdites données ne sont pas caractéristiques d'une hausse prochaine dudit solde de puissance ; si une quantité d'énergie stockée par les moyens de stockage électrique 11 est insuffisante pour alimenter l'unité électrochimique 13 pendant ladite période de sécurité.

Cela évite une situation problématique dans laquelle l'alimentation de l'unité électrochimique 13 serait interrompue de façon brutale, causant un endommagement plus conséquent que le vieillissement prématuré dû à une désactivation et une désactivation rapprochée.

Plus précisément, si Q est la charge de la batterie et que le système 1 (et le cas échéant l'équipement 2) fonctionne sous une tension U, l'activation d'urgence est mise en oeuvre si *Q* * *U < (P_{C}* + *P_{H2}* - *P_{F})* * *t_{SEC}.*

On note qu'il peut être prévu dans un tel cas de retarder la réactivation suivante de l'unité électrochimique 13 une fois la hausse du solde de puissance Δ*P* au-delà du premier seuil survenue.

### Procédé

Selon un deuxième aspect, l'invention concerne le système 1 mettant en oeuvre le procédé selon le premier aspect de l'invention.

Ce système 1 comprend une source électrique intermittente 10, des moyens de stockage électrique 11, une pile à combustible 12, une unité électrochimique de génération dudit combustible 13 et un module de contrôle 30 (et le cas échéant des auxiliaires électriques ou chimiques).

Le module de contrôle 30 est configuré pour mettre en oeuvre :
- un module de détermination d'un solde de puissance du système 1 en fonction de la puissance consommée par un équipement 2 alimenté par le système 1 et de la puissance fournie par la source électrique intermittente 10.
- un module de réception de données représentatives de la stabilité dudit solde de puissance pendant une période de sécurité ;
- un module d'activation de l'unité électrochimique 13 si ledit solde de puissance est supérieur à un premier seuil et lesdites données ne sont pas caractéristiques d'une baisse prochaine dudit solde de puissance ;
- un module d'activation de la pile à combustible 12 si ledit solde de puissance est inférieur à un deuxième seuil inférieur au premier seuil et lesdites données ne sont pas caractéristiques d'une hausse prochaine dudit solde de puissance (et avantageusement même si ledit solde de puissance est inférieur à un deuxième seuil inférieur au premier seuil et lesdites données sont caractéristiques d'une hausse prochaine dudit solde de puissance ; si une quantité d'énergie stockée par les moyens de stockage électrique 11 est insuffisante pour alimenter l'équipement 2 pendant ladite période de sécurité).

Avantageusement, le module de contrôle 30 met également en oeuvre :
- un module de désactivation de la pile à combustible 12 si ledit solde de puissance est supérieur au deuxième seuil et lesdites données ne sont pas caractéristiques d'une baisse prochaine dudit solde de puissance,
- un module de désactivation de l'unité électrochimique 13 si ledit solde de puissance est inférieur au premier seuil et lesdites données ne sont pas caractéristiques d'une hausse prochaine dudit solde de puissance (et avantageusement même si ledit solde de puissance est inférieur au premier seuil et lesdites données ne sont pas caractéristiques d'une hausse prochaine dudit solde de puissance ; si une quantité d'énergie stockée par les moyens de stockage électrique 11 est insuffisante pour alimenter l'équipement 2 et l'unité électrochimique 13 pendant ladite période de sécurité).

## Revendications

1. Procédé d'alimentation électrique d'un équipement (2) par un système (1) comprenant une source électrique intermittente (10), des moyens de stockage électrique (11), une pile à combustible (12), une unité électrochimique de génération dudit combustible (13), le procédé comprend la mise en œuvre d'étapes par un module de contrôle (30) d'étapes de :
a) détermination d'un solde de puissance du système (1) en fonction de la puissance consommée par l'équipement (2) et de la puissance fournie par la source électrique intermittente (10) ;
b) réception de données représentatives de la stabilité dudit solde de puissance pendant une période de sécurité ;
la dite mise en œuvre étant **caractérisée par** l'étape de:
c) contrôle de la pile à combustible (12) et de l'unité électrochimique (13) de sorte à :
∘ activer l'unité électrochimique (13) si ledit solde de puissance est supérieur à un premier seuil et lesdites données ne sont pas caractéristiques d'une baisse prochaine dudit solde de puissance ;
∘ activer la pile à combustible (12) si ledit solde de puissance est inférieur à un deuxième seuil inférieur au premier seuil et lesdites données ne sont pas caractéristiques d'une hausse prochaine dudit solde de puissance.

2. Procédé selon la revendication 1, dans lequel l'étape c) comprend le contrôle de la pile à combustible (12) de sorte à activer la pile à combustible (12) même si ledit solde de puissance est inférieur à un deuxième seuil inférieur au premier seuil et lesdites données sont caractéristiques d'une hausse prochaine dudit solde de puissance ; si une quantité d'énergie stockée par les moyens de stockage électrique (11) est insuffisante pour alimenter l'équipement (2) pendant ladite période de sécurité.

3. Procédé selon l'une des revendications 1 et 2, dans lequel l'étape c) comprend le contrôle de la pile à combustible (12) de sorte à désactiver la pile à combustible (12) si ledit solde de puissance est supérieur au deuxième seuil et lesdites données ne sont pas caractéristiques d'une baisse prochaine dudit solde de puissance.

4. Procédé selon l'une des revendications 1 à 3, dans lequel l'étape c) comprend le contrôle de l'unité électrochimique (13) de sorte à désactiver l'unité électrochimique (13) si ledit solde de puissance est inférieur au premier seuil et lesdites données ne sont pas caractéristiques d'une hausse prochaine dudit solde de puissance.

5. Procédé selon la revendication 4, dans lequel l'étape c) comprend le contrôle de l'unité électrochimique (13) de sorte à désactiver l'unité électrochimique (13) même si ledit solde de puissance est inférieur au premier seuil et lesdites données ne sont pas caractéristiques d'une hausse prochaine dudit solde de puissance ; si une quantité d'énergie stockée par les moyens de stockage électrique (11) est insuffisante pour alimenter l'équipement (2) et l'unité électrochimique (13) pendant ladite période de sécurité.

6. Procédé selon l'une des revendications 1 à 5, dans lequel ladite période de sécurité est une durée minimale recommandée de fonctionnement continu de la pile à combustible (12) ou de l'unité électrochimique (13) pour éviter son endommagement.

7. Procédé selon l'une des revendications 1 à 6, dans lequel ladite période de sécurité est comprise entre une et dix minutes.

8. Procédé selon l'une des revendications 1 à 7, dans lequel l'unité électrochimique (13) est constituée d'au moins un électrolyseur.

9. Procédé selon la revendication 8, dans lequel l'unité électrochimique (13) et la pile à combustible (12) sont un unique équipement réversible.

10. Procédé selon l'une des revendications 1 à 9, dans lequel ledit combustible est du dihydrogène.

11. Procédé selon l'une des revendications 1 à 10, dans lequel les moyens de stockage électrique (11) sont constitués d'au moins une batterie et/ou au moins un supercondensateur et/ou au moins un volant d'inertie.

12. Procédé selon l'une des revendications 1 à 11, dans lequel le premier seuil de solde de puissance correspond sensiblement à la puissance nécessaire pour le fonctionnement de l'unité électrochimique (13), et le deuxième seuil de solde de puissance est sensiblement nul.

13. Système (1) comprenant une source électrique intermittente (10), des moyens de stockage électrique (11), une pile à combustible (12), une unité électrochimique de génération dudit combustible (13) et un module de contrôle (30), configuré pour mettre en œuvre :
- un module de détermination d'un solde de puissance du système (1) en fonction de la puissance consommée par un équipement (2) alimenté par le système (1) et de la puissance fournie par la source électrique intermittente (10) ;
- un module de réception de données représentatives de la stabilité dudit solde de puissance pendant une période de sécurité ;
le système étant **caractérisé par** le module de contrôle (30) configuré pour mettre en oeuvre :
- un module d'activation de l'unité électrochimique (13) si ledit solde de puissance est supérieur à un premier seuil et lesdites données ne sont pas caractéristiques d'une baisse prochaine dudit solde de puissance ;
- un module d'activation de la pile à combustible (12) si ledit solde de puissance est inférieur à un deuxième seuil inférieur au premier seuil et lesdites données ne sont pas caractéristiques d'une hausse prochaine dudit solde de puissance.

## Patentansprüche

1. Verfahren zur Stromversorgung einer Vorrichtung (2) durch ein System (1) umfassend eine intermittierende Stromquelle (10), Stromspeichermittel (11), eine Brennstoffzelle (12), eine elektrochemische Einheit zur Erzeugung des Brennstoffs (13), wobei das Verfahren die Durchführung, durch ein Steuermodul (30), folgender Schritte umfasst:
a) Bestimmen eines Leistungssaldos des Systems (1) in Abhängigkeit von der Leistung, die durch die Vorrichtung (2) verbraucht wird, und von der Leistung, die durch die intermittierende Stromquelle (10) bereitgestellt wird;
b) Empfangen von Daten, die für die Stabilität des Leistungssaldos während eines Sicherheitszeitraums repräsentativ sind;
wobei die Durchführung **gekennzeichnet ist durch** den folgenden Schritt:
c) Ansteuern der Brennstoffzelle (12) und der elektrochemischen Einheit (13), in der Form, dass
∘ die elektrochemische Einheit (13) aktiviert wird, wenn der Leistungssaldo größer ist als ein erster Schwellwert und die Daten nicht für ein nahe bevorstehendes Absinken des Leistungssaldos charakteristisch sind;
∘ die Brennstoffzelle (12) aktiviert wird, wenn der Leistungssaldo kleiner ist als ein zweiter Schwellwert, der kleiner ist als der erste Schwellwert, und die Daten nicht für ein nahe bevorstehendes Ansteigen des Leistungssaldos charakteristisch sind.

2. Verfahren nach Anspruch 1, bei dem der Schritt c) das Ansteuern der Brennstoffzelle (12) umfasst, in der Form, dass die Brennstoffzelle (12) aktiviert wird, selbst wenn der Leistungssaldo kleiner ist als ein zweiter Schwellwert, der kleiner ist als der erste Schwellwert, und die Daten für ein nahe bevorstehendes Ansteigen des Leistungssaldos charakteristisch sind; wenn eine durch die Stromspeichermittel (11) gespeicherte Energiemenge nicht ausreichend ist, um die Vorrichtung (2) während des Sicherheitszeitraums zu versorgen.

3. Verfahren nach einem der Ansprüche 1 und 2, bei dem der Schritt c) das Ansteuern der Brennstoffzelle (12) in der Form umfasst, dass die Brennstoffzelle (12) deaktiviert wird, wenn der Leistungssaldo größer ist als der zweite Schwellwert und die Daten nicht für ein nahe bevorstehendes Absinken des Leistungssaldos charakteristisch sind.

4. Verfahren nach einem der Ansprüche 1 bis 3, bei dem der Schritt c) das Ansteuern der elektrochemischen Einheit (13) umfasst, in der Form, dass die elektrochemische Einheit (13) deaktiviert wird, wenn der Leistungssaldo kleiner ist als der erste Schwellwert und die Daten nicht für ein nahe bevorstehendes Ansteigen des Leistungssaldos charakteristisch sind.

5. Verfahren nach Anspruch 4, bei dem der Schritt c) das Ansteuern der elektrochemischen Einheit (13) umfasst, in der Form, dass die elektrochemische Einheit (13) deaktiviert wird, selbst wenn der Leistungssaldo kleiner ist als der erste Schwellwert und die Daten nicht für ein nahe bevorstehendes Ansteigen des Leistungssaldos charakteristisch sind; wenn eine durch die Stromspeichermittel (11) gespeicherte Energiemenge nicht ausreichend ist, um die Vorrichtung (2) und die elektrochemische Einheit (13) während des Sicherheitszeitraums zu versorgen.

6. Verfahren nach einem der Ansprüche 1 bis 5, bei dem der Sicherheitszeitraum eine für die durchgängigen Betrieb der Brennstoffzelle (12) oder der elektrochemischen Einheit (13) empfohlene Mindestdauer ist, um deren Beschädigung zu vermeiden.

7. Verfahren nach einem der Ansprüche 1 bis 6, bei dem der Sicherheitszeitraum zwischen einer und zehn Minuten beträgt.

8. Verfahren nach einem der Ansprüche 1 bis 7, bei dem die elektrochemische Einheit (13) von mindestens einem Elektrolyseur gebildet ist.

9. Verfahren nach Anspruch 8, bei dem die elektrochemische Einheit (13) und die Brennstoffzelle (12) eine einzige reversible Vorrichtung sind.

10. Verfahren nach einem der Ansprüche 1 bis 9, bei dem der Brennstoff Diwasserstoff ist.

11. Verfahren nach einem der Ansprüche 1 bis 10, bei dem die Stromspeichermittel (11) von mindestens einer Batterie und/oder von mindestens einem Superkondensator und/oder von mindestens einer Schwungscheibe gebildet sind.

12. Verfahren nach einem der Ansprüche 1 bis 11, bei dem der erste Schwellwert des Leistungssaldos im Wesentlichen der für den Betrieb der elektrochemischen Einheit (13) notwendigen Leistung entspricht und der zweite Schwellwert des Leistungssaldos im Wesentlichen gleich Null ist.

13. System (1) umfassend eine intermittierende Stromquelle (10), Stromspeichermittel (11), eine Brennstoffzelle (12), eine elektrochemische Einheit zur Erzeugung des Brennstoffs (13) und ein Ansteuermodul (30), das eingerichtet ist zum Implementieren von
- einem Modul zum Bestimmen eines Leistungssaldos des Systems (1) in Abhängigkeit von der Leistung, die durch die von dem System (1) versorgte Vorrichtung (2) verbraucht wird, und von der Leistung, die durch die intermittierende Stromquelle (10) bereitgestellt wird;
- einem Modul zum Empfangen von Daten, die für die Stabilität des Leistungssaldos während eines Sicherheitszeitraums repräsentativ sind;
wobei das System **gekennzeichnet ist durch** das Steuermodul(30), das eingerichtet ist zum Implementieren von
- einem Modul zum Aktivieren der elektrochemischen Einheit (13), wenn der Leistungssaldo größer ist als ein erster Schwellwert und die Daten nicht für ein nahe bevorstehendes Absinken des Leistungssaldos charakteristisch sind;
- einem Modul zum Aktivieren der Brennstoffzelle (12), wenn der Leistungssaldo kleiner ist als ein zweiter Schwellwert, der kleiner ist als der erste Schwellwert, und die Daten nicht für ein nahe bevorstehendes Ansteigen des Leistungssaldos charakteristisch sind.

## Claims

1. Method for electrically powering an apparatus (2) by means of a system (1) comprising an intermittent electrical source (10), electrical storage means (11), a fuel cell (12), and an electrochemical unit for generating said fuel (13), the method comprising implementing the following steps by means of a control module (30):
a) determining a power balance of the system (1) as a function of the power consumed by the apparatus (2) and the power supplied by the intermittent electrical source (10);
b) receiving data representative of the stability of said power balance during a safety period; said implementation being **characterized by** the step of:
c) controlling the fuel cell (12) and the electrochemical unit (13) so as to:
∘ activate the electrochemical unit (13) if said power balance is greater than a first threshold and said data are not characteristic of an imminent decrease in said power balance; and
∘ activate the fuel cell (12) if said power balance is less than a second threshold that is less than the first threshold and said data are not characteristic of an imminent increase in said power balance.

2. Method according to claim 1, wherein step c) comprises controlling the fuel cell (12) so as to activate the fuel cell (12) even if said power balance is less than a second threshold that is less than the first threshold and said data are characteristic of an imminent increase in said power balance; and if an amount of energy stored by the electrical storage means (11) is insufficient to power the apparatus (2) during said safety period.

3. Method according to either claim 1 or claim 2, wherein step c) comprises controlling the fuel cell (12) so as to deactivate the fuel cell (12) if said power balance is greater than the second threshold and said data are not characteristic of an imminent decrease in said power balance.

4. Method according to any of claims 1 to 3, wherein step c) comprises controlling the electrochemical unit (13) so as to deactivate the electrochemical unit (13) if said power balance is less than the first threshold and said data are not characteristic of an imminent increase in said power balance.

5. Method according to claim 4, wherein step c) comprises controlling the electrochemical unit (13) so as to deactivate the electrochemical unit (13) even if said power balance is less than the first threshold and said data are not characteristic of an imminent increase in said power balance; and if an amount of energy stored by the electrical storage means (11) is insufficient to power the apparatus (2) and the electrochemical unit (13) during said safety period.

6. Method according to any of claims 1 to 5, wherein said safety period is a minimum recommended duration of continuous operation of the fuel cell (12) or the electrochemical unit (13) for avoiding damage thereto.

7. Method according to any of claims 1 to 6, wherein said safety period is between one and ten minutes.

8. Method according to any of claims 1 to 7, wherein the electrochemical unit (13) consists of at least one electrolyzer.

9. Method according to claim 8, wherein the electrochemical unit (13) and the fuel cell (12) are a single reversible apparatus.

10. Method according to any of claims 1 to 9, wherein said fuel is dihydrogen.

11. Method according to any of claims 1 to 10, wherein the electrical storage means (11) consist of at least one battery and/or at least one supercapacitor and/or at least one flywheel.

12. Method according to any of claims 1 to 11, wherein the first power balance threshold corresponds substantially to the power necessary for operating the electrochemical unit (13), and the second power balance threshold is substantially zero.

13. System (1) comprising an intermittent electrical source (10), electrical storage means (11), a fuel cell (12), an electrochemical unit for generating said fuel (13) and a control module (30), configured to implement:
- a module for determining a power balance of the system (1) as a function of the power consumed by an apparatus (2) that is powered by the system (1) and of the power supplied by the intermittent electrical source (10);
- a module for receiving data representative of the stability of said power balance during a safety period;
the system being **characterized by** the control module (30) being configured to implement:
- an activation module of the electrochemical unit (13) if said power balance is greater than a first threshold and said data are not characteristic of an imminent decrease in said power balance;
- an activation module of the fuel cell (12) if said power balance is less than a second threshold that is less than the first threshold and said data are not characteristic of an imminent increase in said power balance.
